# FASCICULE DE BREVET EUROPEEN

(11) **EP 1 138 923 B1**
(45) Date de publication et mention de la délivrance du brevet: **19.10.2005**
(21) Numéro de dépôt: 01400485.7
(22) Date de dépôt: 23.02.2001
(51) Int. Cl.: F02K 9/95, F02K 9/28

(54) **Moteur autopropulsé à plusieurs étages et système de séparation situé entre deux étages consécutifs**
Mehrstufenraketenmotor mit einer Interstufen-Schutzvorrichtung
A multi-staged rocket engine with an interstage separation bulkhead

(30) Priorité: 01.03.2000 FR 0002634
(43) Date de publication de la demande: 04.10.2001
(73) Titulaire: ROXEL FRANCE, 92357 Le Plessis-Robinson (FR)
(72) Inventeur: Guillet, Claude, 33160 Saint Medard en Jalles (FR); Hermez, Christophe, 33000 Bordeaux (FR)
(74) Mandataire: Le Roux, Martine

(56) Documents cités:
- EP-A- 0 372 139
- US-A- 3 568 448
- US-A- 4 972 673
- US-A- 5 419 118
- US-A- 5 600 946

## Description

La présente invention concerne un moteur autopropulsé à plusieurs étages placé à l'arrière d'un missile.

Les moteurs comprenant au moins deux chargements pyrotechniques séparés les uns des autres par des cloisons étanches sont connus de longue date. Le brevet EP 428 627 décrit par exemple un moteur dans lequel les différents chargements pyrotechniques sont isolés les uns des autres par des systèmes de séparation constitués chacun à l'aide d'une pièce discoïde portant quatre orifices sur laquelle est fixée par soudure un opercule plat muni de quatre zones de faiblesse, chacun d'elles étant située en vis-à-vis de l'un desdits orifices. Un système d'allumage interne est par ailleurs associé à chaque chargement pyrotechnique et assure l'initiation en combustion de celui-ci au moment voulu.

D'autres brevets, comme par exemple le brevet US 5,613,358, divulguent un moteur doté de deux chargements pyrotechniques séparés l'un de l'autre par une cloison bombée portant un orifice central et dans lequel est inséré un allumeur électro-pyrotechnique dont l'axe de révolution est confondu avec celui du moteur. Un opercule pétalable muni également d'un orifice central est rapporté sur la cloison et enserre ledit allumeur de façon étanche. Mais, ces différents dispositifs, compte-tenu de l'implantation particulière de l'allumeur, induisent :
- D'une part, des coûts de réalisation très élevés car les pièces mécaniques employées sont relativement complexes à fabriquer et à assembler. De plus, les alimentations électriques utilisées pour relier les allumeurs à une source de courant électrique étant généralement incluses dans le moteur, l'emploi de certaines géométries de chargements pyrotechniques peut être interdit ou du moins contraindre l'homme de métier à prévoir des aménagements internes spéciaux coûteux et difficiles à réaliser.
- D'autre part, que le risque de fonctionnement intempestif du moteur durant son stockage ou son transport est réel puisque les chargements pyrotechniques et les systèmes d'allumage associés sont nécessairement réunis dès les premières étapes de fabrication.

La demande de brevet EP 372 139 décrit par ailleurs un moteur à plusieurs étages, qui possède des systèmes d'allumage situés dans le sens d'écoulement du gaz. Les étages sont séparés par une cloison munies de perforations qui s'étendent parallèlement à l'axe du moteur et qui sont destinées à laisser passer les gaz de combustion d'un étage à l'autre. La présente invention a pour objet de pallier les différents problèmes évoqués précédemment et concerne un moteur situé à l'arrière d'un missile, ce moteur comprenant au moins deux étages contenant chacun un chargement pyrotechnique particulier et étant caractérisé en ce que,
i) les deux étages sont séparés l'un de l'autre par une cloison multiperforée et initialement recouverte par un opercule frangible,
ii) chacun des deux chargements pyrotechniques dispose d'un système d'allumage spécifique, ces deux systèmes d'allumage étant fixés dans ladite cloison de manière à ce qu'ils soient situés dans un plan perpendiculaire au sens du flux de gaz généré par la combustion desdits chargements pyrotechniques.

Ainsi, la disposition particulière des systèmes d'allumage autorise l'emploi de pièces mécaniques faciles à usiner pour la fabrication de la cloison et de l'opercule frangible. En effet, il n'est plus nécessaire désormais de prévoir un orifice central aussi bien dans la cloison que dans l'opercule pour permettre l'introduction du système d'allumage suivant l'axe du moteur. De plus, il en découle que la condition impérative d'étanchéité totale entre les deux chargements pyrotechniques est beaucoup plus facile à satisfaire.

Préférentiellement, la cloison possède une zone annulaire élargie dans laquelle il est aménagé deux évidements diamétralement opposés contenant chacun l'un des deux systèmes d'allumage. Un grand avantage réside par conséquent dans le fait que l'intégration de ces systèmes d'allumage est réalisée par l'extérieur du moteur et qu'elle peut être effectuée durant le stockage dudit moteur sur le site final. De plus, il est alors possible de remplacer très facilement les systèmes d'allumage déjà incorporés par de nouveaux systèmes d'allumage au bout d'une certain délai de stockage du moteur. Il en découle également que les alimentations électriques peuvent être situées pratiquement sur toute leur longueur à l'extérieur du moteur, laissant de ce fait à l'homme du métier toute latitude dans le choix de la géométrie des chargements pyrotechniques.

Avantageusement, un canal spécifique est creusé au niveau de chacun des deux systèmes d'allumage de manière à ce que chacun de ces derniers soit en libre communication avec le chargement pyrotechnique auquel il est associé. De plus, une charge pyrotechnique d'allumage de forme annulaire peut être intercalée entre chaque chargement pyrotechnique et son système d'allumage spécifique.

Préférentiellement, la cloison est bombée, l'opercule frangible présente une couronne périphérique soudée directement sur ladite cloison et cet opercule est recouvert par une protection thermique souple.

Avantageusement, chacun des deux étages du moteur est réalisé à l'aide d'un corps spécifique, la cloison assurant la liaison mécanique entre ces deux corps au niveau de sa zone annulaire élargie. Avantageusement encore, les deux corps sont fixés sur ladite cloison par soudure.

Ce moteur qui, par souci de simplicité, n'a été décrit comme ne comportant que deux étages séparés l'un de l'autre par une cloison, peut être évidemment étendu à un moteur comportant n étages et n-1 cloisons séparatrices, chacune de ces n-1 cloisons étant alors située entre deux étages consécutifs.

Le moteur de l'invention est avantageusement caractérisé en ce que:
i) la cloison de séparation est réalisée à l'aide d'une pièce métallique bombée qui comporte deux faces et une pluralité d'orifices initialement recouverts par un opercule frangible,
ii) cette pièce métallique présente une zone annulaire élargie dans laquelle il est aménagé deux évidements diamétralement opposés destinés à recevoir chacun un système d'allumage,
iii) un canal spécifique est creusé dans ladite cloison au niveau de chacun des deux évidements de manière à ce que chacune des deux faces de la pièce métallique soit en libre communication avec l'un de ces derniers.

Préférentiellement, les orifices sont recouverts par un opercule frangible soudé directement sur ladite pièce métallique. De plus, cet opercule est avantageusement recouvert par une protection thermique souple.

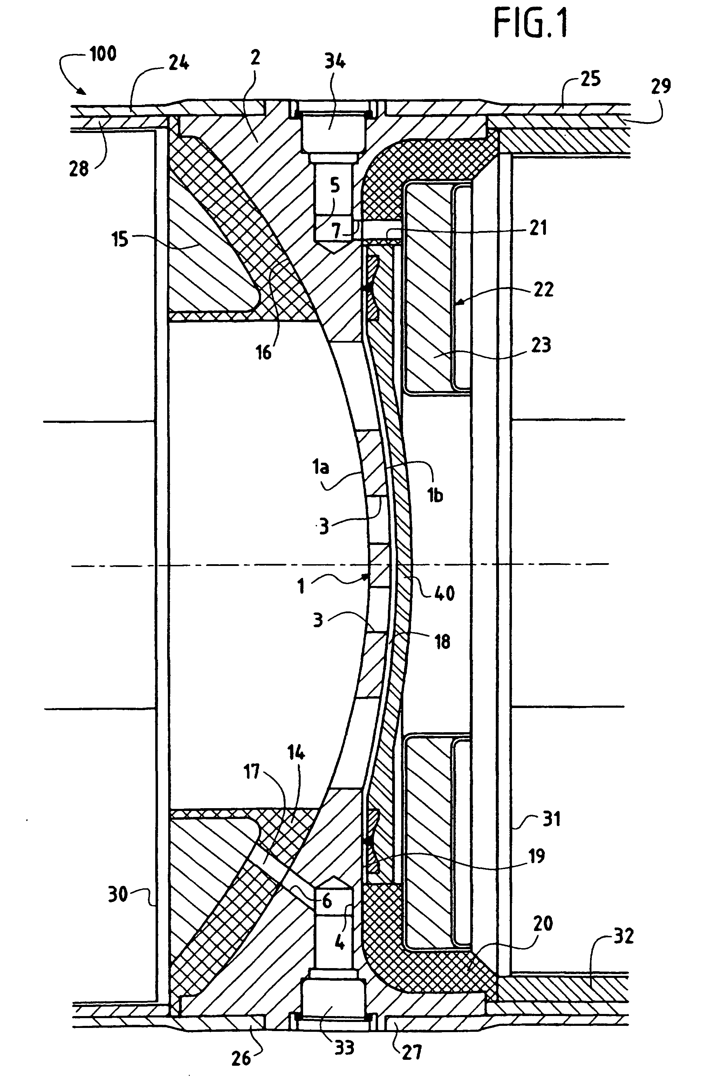

On donne ci-après, en se référant à la figure 1, une description détaillée du mode préféré de réalisation de l'invention.

La figure 1 est une vue partielle en coupe longitudinale d'un moteur selon l'invention.

En se référant à la figure 1, on observe qu'une cloison 1 d'un moteur 100 selon l'invention est réalisée à l'aide d'une pièce métallique cylindrique bombée présentant une première face 1a, une seconde face 1b et une zone annulaire élargie 2. Cette cloison 1 comporte par ailleurs une pluralité d'orifices 3 ainsi que deux évidements 4,5 diamétralement opposés qui sont aménagés dans la zone annulaire élargie 2. Un canal 6,7 spécifique est creusé dans la cloison 1 au niveau de chacun des deux évidements 4, 5 de manière à ce que, d'une part l'évidement 4 soit en libre communication avec la face 1a, et d'autre part, l'évidement 5 soit en libre communication avec la face 1b.

Un socle 14, qui est réalisé dans un matériau rigide thermiquement isolant et sur lequel est montée une charge pyrotechnique d'allumage 15 de forme générale annulaire et à section sensiblement triangulaire, présente un fond 16 qui est fixé par collage le long de la face 1a de la cloison 1. Ce socle 14 comporte par ailleurs un alésage 17 qui coïncide avec la section de sortie du canal 6 relié à l'évidement 4.

Un opercule 18 frangible, qui recouvre les orifices 3 et qui est doté d'une couronne périphérique 19, est fixé par soudure, au niveau de cette couronne périphérique 19, sur la face 1b de la cloison 1. Une protection thermique souple 40 est par ailleurs rapportée puis fixée par collage sur ledit opercule 18. Une pièce annulaire 20, conçue dans un matériau rigide thermiquement isolant, est fixée par collage sur la face 1b au niveau de la zone annulaire élargie 2 de la cloison 1. L'opercule 18 et la pièce annulaire 20 sont dimensionnés de manière à ce que cette dernière enserre ledit opercule 18 de façon étanche sur tout son pourtour à l'exception d'une zone 21 faisant face à la section de sortie du canal 7 relié à l'évidement 5. Un sachet combustible 22 de forme annulaire contenant une charge pyrotechnique d'allumage 23 est ensuite fixé par collage sur ladite pièce annulaire 20.

En se référant également à la figure 1, on observe que le moteur 100 est constitué à partir d'un corps amont 24 métallique cylindrique et d'un corps aval 25 métallique cylindrique qui présentent chacun une extrémité 26, 27 fixée par soudure sur la zone annulaire élargie 2 de la cloison 1. Aussi bien dans le corps amont 24 que dans le corps aval 25, une protection thermique 28, 29 de forme cylindrique est glissée et vient en butée contre la zone annulaire élargie 2. Le corps amont 24 et le corps aval 25, comme leur protection thermique associée 28, 29, comportent respectivement une extrémité non représentée se terminant à l'avant du moteur 100 et une extrémité non représentée se terminant à proximité d'une tuyère de sortie de gaz à l'arrière dudit moteur 100.

Un chargement pyrotechnique 30 de forme cylindrique et de diamètre sensiblement égal à celui de la protection thermique 28 est introduit dans le corps amont 24 et est placé à proximité du chargement pyrotechnique d'allumage 15. De même, un chargement pyrotechnique 31 de forme cylindrique mais de diamètre inférieur à celui du chargement pyrotechnique 30 est glissé dans le corps aval 25. Une protection thermique supplémentaire 32 est positionné entre ledit chargement pyrotechnique 31 et ladite protection thermique 29 pour combler l'espace existant entre ces derniers. Ces deux chargements pyrotechniques 30, 31, qui sont représentés de façon schématique avec un canal central, peuvent en fait être constitués aussi bien par des blocs pleins sans canaux que par des blocs multiperforés par des canaux de différentes sections.

Par ailleurs, il est possible à tout moment d'introduire un allumeur 33, 34 électro-pyrotechnique dans chacun des deux évidements 4, 5. Il est évidemment plus judicieux de le faire après que le moteur 100 a été transporté sur le site d'utilisation ou sur le lieu de stockage final. Chacun des deux allumeurs 33, 34 est alors fixé par vissage dans l'évidement 4, 5 qui lui correspond. De plus, ces deux allumeurs 33, 34 sont chacun reliés à une source d'énergie électrique à l'aide de conducteurs électriques non représentés situés à l'extérieur du moteur 100. Plus précisément, la source d'énergie électrique peut être au choix positionnée à l'avant ou à l'arrière du moteur 100 et les conducteurs électriques, qui peuvent par exemple être logés dans des gouttières externes, courent sur la presque totalité de leur longueur le long du corps amont 24 ou du corps aval 25 selon l'emplacement de ladite source d'énergie électrique.

En fonctionnement, le moteur 100 placé à l'arrière d'un missile est activé lorsque l'allumeur 34 est mis à feu et les gaz ainsi générés viennent au contact de la charge pyrotechnique d'allumage 23 après avoir traversés le canal 7 et la zone 21. Cette charge pyrotechnique d'allumage 23 est immédiatement initiée et provoque l'allumage en combustion du sachet combustible 22 puis du chargement pyrotechnique 31. Ce dernier génère alors des gaz de combustion qui s'échappent par la tuyère de sortie située à l'arrière du moteur 100. Le second allumeur 33 est mis à feu selon un retard prédéterminé et les gaz générés viennent à la rencontre de la charge pyrotechnique d'allumage 15 après avoir traversés le canal 6 et l'alésage 17. Cette charge pyrotechnique d'allumage 15 est ainsi initiée en combustion et elle entraîne l'allumage du chargement pyrotechnique 30. Ce dernier libère alors des gaz de combustion qui exercent une pression telle sur l'opercule 18 frangible ainsi que sur la protection thermique souple 40, que ceux-ci se fracturent au niveau des orifices 3 de la cloison 1, les gaz pouvant finalement s'échapper par la tuyère de sortie.

## Revendications

1. Moteur (100) situé à l'arrière d'un missile et comprenant au moins deux étages (24, 25) contenant chacun un chargement pyrotechnique (30, 31) particulier, lesdits deux étages (24, 25) étant séparés l'un de l'autre par une cloison (1) multiperforée et recouverte par un opercule (18) frangible, **caractérisé en ce que** chacun des deux chargements pyrotechniques (30, 31) dispose d'un sytème d'allumage (33, 34) spécifique, ces deux systèmes d'allumage (33, 34) étant fixés dans ladite cloison (1) de manière à ce qu'ils soient situés dans un plan perpendiculaire au sens du flux de gaz généré par la combustion desdits chargements pyrotechniques (30, 31).

2. Moteur (100) selon la revendication 1, **caractérisé en ce que** ladite cloison (1) possède une zone annulaire élargie (2) dans laquelle il est aménagé deux évidements (4, 5) diamétralement opposés contenant chacun l'un des deux systèmes d'allumage (33, 34).

3. Moteur (100) selon la revendication 2, **caractérisé en ce qu'**un canal spécifique (6, 7) est creusé dans la cloison (1) au niveau de chacun des deux systèmes d'allumage (33, 34) de manière à ce que chacun de ces derniers soit en libre communication avec le chargement pyrotechnique (30, 31) auquel il est associé.

4. Moteur (100) selon la revendication 3, **caractérisé en ce qu'**une charge pyrotechnique d'allumage (15, 23) de forme annulaire est intercalée entre chaque chargement pyrotechnique (30, 31) et son système d'allumage (33, 34) spécifique.

5. Moteur (100) selon l'une quelconque des revendications 2 à 4, **caractérisé en ce que** :
i) la cloison (1) est bombée,
ii) l'opercule (18) frangible présente une couronne périphérique (19) soudée directement sur ladite cloison (1),
iii) une protection thermique souple (40) recouvre ledit opercule (18).

6. Moteur (100) selon l'une quelconque des revendications 2 à 5, **caractérisé en ce que** :
i) chacun des deux étages (24, 25) est réalisé à l'aide d'un corps spécifique,
ii) la cloison (1) assure la liaison mécanique entre ces deux corps au niveau de sa zone annulaire élargie (2).

7. Moteur (100) selon la revendication 6, **caractérisé en ce que** les deux corps (24, 25) sont fixés sur ladite doison (1) par soudure.

8. Moteur (100) selon l'une quelconque des revendications 1 à 7, **caractérisé en ce que** :
i) ladite cloison (1) est réalisée à l'aide d'une pièce métallique bombée qui comporte deux faces (1a, 1b) et une pluralité d'orifices (3) initialement recouverts par un opercule (18) frangible,
ii) ladite pièce métallique présente une zone annulaire élargie (2) dans laquelle il est aménagé deux évidements (4, 5) diamétrialement opposés destinés à recevoir chacun un système d'allumage (33, 34),
iii) un canal spécifique (6, 7) est creusé dans ladite pièce métallique au niveau de chacun des deux évidements (4, 5) de manière à ce que chacune des deux faces (1a, 1b) de ladite pièce métallique soit en libre communication avec l'un de ces derniers (4 ou 5).

9. Moteur (100) selon la revendication 8, **caractérisé en ce que** les orifices (3) sont recouverts par un opercule (18) frangible soudé directement sur la pièce métallique.

10. Moteur (100) selon la revendication 8 ou 9, **caractérisé en ce que** l'opercule (18) frangible est recouvert par une protection thermique souple (40).

## Patentansprüche

1. Motor (100), der im hinteren Teil einer Lenkwaffe angeordnet ist und mindestens zwei Stufen (24, 25) mit jeweils einer besonderen pyrotechnischen Ladung (30,31) aufweist, wobei die beiden Stufen (24, 25) über eine Trennwand (1) voneinander getrennt sind, die mehrfach durchlöchert und mit einem zerbrechlichen Innenhütchen (18) überzogen ist, **dadurch gekennzeichnet, dass** jede der beiden pyrotechnischen Ladungen (30, 31) über ein spezifisches Zündsystem (33, 34) verfügt, wobei die beiden Zündsysteme (33, 34) in der Trennwand (1) so befestigt sind, dass sie in einer senkrecht zur Fließrichtung des durch die Verbrennung der pyrotechnischen Ladungen (30, 31) erzeugten Gases verlaufenden Ebene angeordnet sind.

2. Motor (100) nach Anspruch 1, **dadurch gekennzeichnet, dass** die Trennwand (1) einen in der Breite erweiterten ringförmigen Bereich (2) aufweist, in welchem zwei diametral gegenüberliegende Vertiefungen (4, 5) angeordnet sind, von denen jede eines der beiden Zündsysteme (33, 34) enthält.

3. Motor (100) nach Anspruch 2, **dadurch gekennzeichnet, dass** in der Trennwand (1) ein jeweils spezifischer Kanal (6,7) in Höhe von jedem der beiden Zündsysteme (33, 34) so ausgebohrt ist, dass letztere mit der ihnen jeweils zugeordneten pyrotechnischen Ladung (30, 31) in freier Verbindung stehen.

4. Motor (100) nach Anspruch 3, **dadurch gekennzeichnet, dass** zwischen jeder pyrotechnischen Ladung (30, 31) und ihrem spezifischen Zündsystem (33, 34) eine pyrotechnische Zündladung (15, 23) in ringförmiger Form eingeschoben ist.

5. Motor (100) nach einem der Ansprüche 2 bis 4, **dadurch gekennzeichnet, dass**
i) die Trennwand (1) gewölbt ist,
ii) das zerbrechliche Innenhütchen (18) eine direkt auf die Trennwand (1) aufgeschweißte periphere Einfassung (19) aufweist, und
iii) ein elastischer Wärmeschutzüberzug (40) das Innenhütchen (18) überdeckt.

6. Motor (100) nach einem der Ansprüche 2 bis 5, **dadurch gekennzeichnet, dass**
i) jede der beiden Stufen (24, 25) durch einen spezifischen Körper dargestellt wird,
ii) die Trennwand (1) in Höhe ihres ringförmigen in der Breite erweiterten Bereichs (2) für die mechanische Verbindung zwischen den beiden Körpern sorgt.

7. Motor (100) nach Anspruch 6, **dadurch gekennzeichnet, dass** die beiden Körper (24, 25) auf der Trennwand (1) durch Verschweißen angebracht sind.

8. Motor (100) nach einem der Ansprüche 1 bis 7, **dadurch gekennzeichnet, dass**
i) die Trennwand(1) aus einem gewölbten Metallstück gefertigt ist, welches zwei Seiten (1a, 1b) sowie eine Anzahl von Öffnungen (3) aufweist, die anfänglich mit einem zerbrechlichen Innenhütchen (18) überdeckt sind,
ii) das Metallstück einen in der Breite erweiterten ringförmigen Bereich (2) aufweist, in welchem zwei diametral gegenüberliegende Vertiefungen (4, 5) zur jeweiligen Aufnahme eines Zündsystems (33, 34) angeordnet sind,
iii) in das Metallstück ein spezifischer Kanal (6,7) in Höhe von jeder der beiden Vertiefungen (4, 5) so gebohrt ist, dass jede der beiden Seiten (1a, 1b) des Metallstücks in freier Verbindung mit jeweils einer der letzteren (4 oder 5) steht.

9. Motor (100) nach Anspruch 8, **dadurch gekennzeichnet, dass** die Öffnungen (3) von einem direkt auf das Metallstück aufgeschweißten zerbrechlichen Innenhütchen (18) überdeckt werden.

10. Motor (100) nach Anspruch 8 oder 9, **dadurch gekennzeichnet, dass** das zerbrechliche Innenhütchen (18) von einem elastischen Wärmeschutzüberzug (40) überdeckt wird.

## Claims

1. Rocket engine (100) located aft of a missile and comprising at least two stages (24,25) each containing a particular pyrotechnical load (30, 31), said two stages (24, 25) being separated from each other by a multi-perforated bulkhead (1) covered by a frangible cover (18), **characterized in that** each of the two pyrotechnical loads (30, 31) has a specific ignition system (33, 34), these two ignition systems (33, 34) being fixed in said bulkhead (1) so that they are positioned in a plane perpendicular to the direction of the gas flow generated by the combustion of said pyrotechnical loads (30,31).

2. Rocket engine (100) according to claim 1, **characterized in that** said bulkhead (1) has an enlarged annular area (2) in which two recesses (4, 5) are provided that are diametrically opposite and each contain one of the two ignition systems (33, 34).

3. Rocket engine (100) according to claim 2, **characterized in that** a specific channel (6, 7) is hollowed out in the bulkhead (1) at the level of each of the two ignition systems (33, 34) so that each of these systems is in free communication with the pyrotechnical load (30, 31) with which it is associated.

4. Rocket engine (100) according to claim 3, **characterized in that** a pyrotechnical ignition charge (15, 23) of annular shape is inserted between each pyrotechnical load (30, 31) and its specific ignition system (33, 34).

5. Rocket engine (100) according to any one of claims 2 to 4, **characterized in that**:
i) the bulkhead (1) is convex-shaped,
ii) the frangible cover (18) has a peripheral crown (19) directly welded onto said bulkhead (1),
iii) a flexible thermal protection (40) is laid over said cover (18).

6. Rocket engine (100) according to any one of claims 2 to 5, **characterized in that**:
i) each of the two stages (24, 25) is fabricated using a specific body,
ii) the bulkhead (1) ensures the mechanical link between these two bodies at its enlarged annular area (2).

7. Rocket engine (100) according to claim 6, **characterized in that** the two bodies (24, 25) are fixed onto said bulkhead (1) by welding.

8. Rocket engine (100) according to any one of claims 1 to 7, **characterized in that**:
i) said bulkhead (1) is made using a convex metal part comprising two faces (1a, 1b) and a plurality of orifices (3) initially covered by a frangible cover (18),
ii) said metal part has an enlarged annular area (2) in which two recesses (4, 5) are provided that are diametrically opposite and each intended to receive an ignition system (33, 34),
iii) a specific channel (6, 7) is hollowed out in said metal part at each of the two recesses (4, 5) so that each of the two faces (1a, 1b) of said metal part is in free communication with one of these recesses (4 or 5).

9. Rocket engine (100) according to claim 8, **characterized in that** the orifices (3) are covered with a frangible cover (18) directly welded onto the metal part.

10. Rocket engine (100) according to claim 8 or 9, **characterized in that** the frangible cover (18) is covered by a flexible thermal protection (40).
